# EUROPEAN PATENT APPLICATION

(11) **EP 2 363 583 A1**
(43) Date of publication of application: **07.09.2011**
(21) Application number: 11156521.4
(22) Date of filing: 02.03.2011
(51) Int. Cl.: F02B 31/06, F02D 9/16

(54) **Air intake device for internal combustion engines**

(30) Priority: 02.03.2010 FR 1051507
(71) Applicant: Mann + Hummel GmbH, 71638 Ludwigsburg (DE)
(72) Inventor: Warnery, Stéphane, 35200, Rennes (FR); Douxami, Hervé, 53440, Aron (FR); Sechet, Jocelin, 53150, Montsurs (FR)

(57) **Abstract**

An air intake device for an engine comprising an intake manifold (1) equipped with a series of intake pipes (4) respectively associated with an inlet duct (5) of the cylinder head (3), each of the inlet ducts being subdivided into an upper duct segment (50) and a lower duct segment (51) by a partition (6), and the intake manifold (1) being equipped with a series of flaps (7) mounted about a common rotation shaft (8). The partition (6) of each of the inlet ducts (5) extends into the associated intake pipe (4), and each of the flaps (7 ) is mobile between an open position and a sealing position in which it essentially seals the lower segment (51) of the associated inlet duct (5).

## Description

### Field of the invention

The present invention relates to an air intake device for an internal combustion engine with several cylinders.

### State of the art

Such an air intake device classically comprises an intake manifold that is fixed to a flange of the cylinder head of the engine and is equipped with a series of intake pipes respectively associated with an inlet duct of the cylinder head.

Each inlet duct leads into one of the cylinders of the engine so as to enable it to be supplied with air or as applicable with an air/fuel mixture.

It is well-known that in internal combustion engines, it is advantageous to reduce the amount of air supplying the cylinders in low load conditions, particularly upon engine starting, so as to optimise the combustion of the fuel and to reduce emissions of noxious gases.

To this effect, document EP 1 157 200 B1 has already proposed an air intake device of the above-mentioned type wherein the inlet ducts are subdivided into two duct segments by a partition at their interconnection zone with the intake pipes, in which they are essentially parallel.

One of these duct segments or lower segment can thus be shut by a flap that is rotatably mobile about a cross shaft equipping the intake manifold at this interconnection zone, depending on the engine load conditions.

From document DE 20 2007 013 151 U1, an air intake device of the above-mentioned type is also known wherein all the flaps equipping the intake manifold are made of synthetic material and are mounted integral on a common cross rotation shaft realized by shaft segments linking the different flaps, the latter also being made of synthetic material and surrounded by metal sleeves enabling them to rotate in bearings.

However, such a configuration is disadvantageous in that it is not sufficiently rigid, despite being large in size and despite the need to implement drive devices of a relatively large diameter.

### Aim of the invention

The present invention aims to propose an air intake device of the above-mentioned type capable of remedying the disadvantages of prior art devices of this kind, and in particular of improving the combustion at low engine loads by reducing pressure drops and by creating gas swirling phenomena in the airflow so as to transfer into the combustion chambers a gaseous mixture that is as homogeneous as possible.

### Presentation and advantages of the invention

To this effect, the present invention relates to an air intake device for an internal combustion engine in which the intake pipes of the intake manifold and the inlet ducts of the cylinder head are essentially parallel at the interconnection zone, and each of the inlet ducts is subdivided by a partition, at this zone, into two duct segments, i.e. an upper duct segment and a lower duct segment.

The intake manifold is equipped, at the interconnection zone, with a series of flaps each associated with an intake pipe and an inlet duct to seal the lower segment of this duct and mounted about a common rotation shaft extending crosswise in the intake manifold, integral with this shaft.

According to the present invention, such an air intake device is characterized in that:
- the partition of each of the inlet ducts extends into the associated intake pipe of the intake manifold, and
- each of the flaps is rotationally mobile between, on the one hand, an open position in which it is housed in an aperture or recess provided for that purpose on the inner surface of the associated intake pipe, on the lower part of this pipe, so as to unobstructedly open essentially the entire segment of the latter and of the associated inlet duct, and on the other hand a sealing position in which it cooperates with the partition so as to essentially seal the lower segment of the associated inlet duct.

According to a first variant of the present invention, in sealing position, the flaps come into contact with the partitions to maintain the sealing at this level such that no air circulates in the lower segment of the inlet ducts.

However, in many cases, it is not desirable to guarantee full sealing at the free end of the partitions in sealing position, and it is instead advantageous to constantly maintain a small passage of air in the lower segment of the inlet ducts.

To this effect, and according to a preferred variant of the present invention, in sealing position, the flaps are positioned opposite the lower segment of the inlet ducts, without being in contact with the free end of the partitions, so as to maintain a leak slot at this level.

Such a configuration has the advantage of developing swirling and turbulence phenomena in the airflow being sucked or drawn back into the inlet ducts with the additional advantage of reducing pressure drop.

According to the present invention, the flaps are preferably constituted of elements made of synthetic material produced by moulding and each constituted by a central plate forming the flap per se, and by two essentially triangular lateral brackets enabling this central plate to be fixed onto the rotation shaft.

According to another particularly advantageous characteristic of the present invention, the rotation shaft onto which the flaps are fixed is a continuous metal shaft that is mounted onto bearings made of synthetic material integral with the intake manifold with the shaft extending crosswise essentially to the median part of the intake pipes, opposite the free end of the partitions, and as applicable the leak slots.

Such a configuration wherein the flaps are preferably over-moulded onto the metal shaft has the advantage of being very rigid, small in size and of enabling drive devices of a small diameter to be used.

However, the presence of segments of the rotation shaft extending through the intake pipes creates an obstacle to airflow in the intake pipes.

Consequently, for such a configuration to be entirely satisfactory, it is necessary for these segments of the rotation shaft to be as "transparent" as possible to airflow so as to avoid obstructing the airflow and thereby reduce the pressure drop as much as possible.

The positioning of the rotation shaft opposite the free end of the partitions and as applicable the leak slots already enables pressure drops to be reduced.

With this aim, and in accordance with another characteristic of the invention, it is further proposed equipping the rotation shaft with flats in line with the intake pipes so as to reduce its section in order to prevent the flow of the drawn in or sucked in air.

### Figures

The characteristics of the air suction device of the present invention will be described in greater detail with reference, but not limited to, the appended figures in which:
- Figure 1 is a longitudinal section of an air intake device according to the preferred variant of the invention at the interconnection zone of an intake pipe and an inlet duct,
- Figure 2 is a perspective view of a rotation shaft bearing a series of flaps.

### Description of one embodiment of the invention

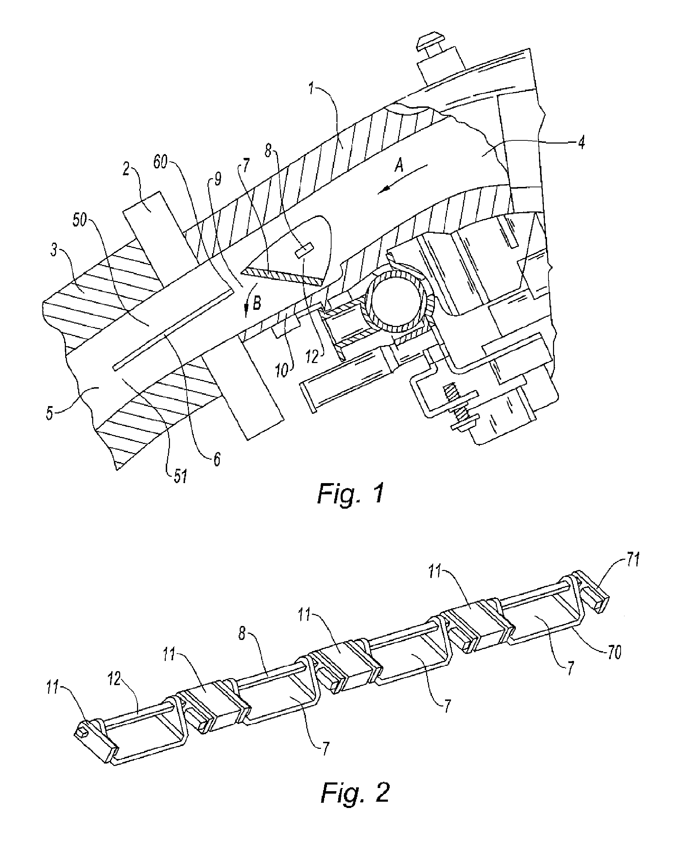

According to Figure 1, the air intake device comprises an intake manifold 1 fixed to a flange 2 of the cylinder head 3 of the engine.

These elements are very schematically represented in Figure 1.

The intake manifold 1 comprises a series of intake pipes 4 each associated with an inlet duct 5 of the cylinder head 3 that are all essentially parallel at the interconnection zone.

In the remainder of the description of Figure 1 herein, reference will only be made to one intake pipe 4 and to the inlet duct 5 associated with this pipe.

It is to be understood that the other intake pipes 4 and the other inlet ducts 5 of the engine have an identical configuration.

According to Figure 1, the inlet duct 5 of the cylinder head 3 leads into one of the cylinders of the engine which is not represented so as to enable it to be supplied with air sucked into the intake manifold 1 along the arrow A.

At its interconnection zone with the intake pipe 4, the inlet duct 5 is subdivided by a partition 6 into two duct segments having essentially identical sections, i.e. an upper duct segment 50 and a lower duct segment 51.

As shown in Figure 1, this partition 6 extends into the intake pipe 4 of the intake manifold 1 beyond the flange 2.

The intake pipe 4 of the intake manifold 1 is further equipped with a flap 7 mounted about a rotation shaft 8 integral with this shaft.

This rotation shaft 8 extends crosswise into the intake manifold 1, to the median part of the intake pipe 4, opposite the free end 60 of the partition 6.

The flap 7 is rotationally mobile between a sealing position represented in Figure 1 and an open position not represented in this Figure.

According to Figure 1, in sealing position, the flap 7 is located opposite the lower duct segment 51 of the inlet duct 5 without being in contact with the partition 6.

A small proportion of the air sucked into the intake pipe 4 along the arrow A can therefore enter the inlet duct 5 segment by a leak slot 9 situated between the flap 7 and the free end 60 of the partition 6.

The upper duct segment 50 of the inlet duct 5 is totally free.

In a manner not represented in Figure 1, from the sealing position the flap 7 can be moved along the arrow B into an open position in which it is housed in a recess or an aperture 10 provided for that purpose on the inner surface of the intake pipe 4 so as to unobstructedly open essentially the entire segment of this pipe 4 and of the associated inlet duct 5.

According to Figure 2, the rotation shaft 8 is a continuous metal shaft extending crosswise in the intake manifold 1 to the median part of the intake pipes 4 as represented in Figure 1.

The flaps 7 are constituted by elements made of synthetic material that are over-moulded onto the rotation shaft 8.

These flaps 7 are more precisely constituted by a central plate 70 forming the flap per se and by two essentially triangular lateral brackets 71 enabling the central plate 70 to be fixed onto the rotation shaft 8.

As shown in Figure 2, the rotation shaft 8 is mounted into bearings 11 made of synthetic material, integral with the intake manifold 1, which are located between the flaps 7.

The rotation shaft 8 is further equipped with flats 12 in line with the intake pipes 4 and the flaps 7 so as to reduce pressure drop.

## Claims

1. An air intake device for an internal combustion engine with several cylinders comprising an intake manifold (1) fixed to a flange (2) of the cylinder head (3) of the engine and comprising a series of intake pipes (4) respectively associated with an inlet duct (5) of the cylinder head (3) leading into one of the cylinders of the engine so as to enable it to be supplied with air, the intake pipes (4) of the intake manifold (1) on the one hand and the inlet ducts (5) of the cylinder head on the other hand being essentially parallel at their interconnection zone, each of the inlet ducts being subdivided, at this interconnection zone, into two duct segments, i.e. an upper duct segment (50) and a lower duct segment (51) by a partition (6), and the intake manifold (1) being equipped, at the interconnection zone, with a series of flaps (7) each associated with an intake pipe (4) and an inlet duct (5) to seal the lower segment (51) of this duct and mounted about a common rotation shaft (8) extending crosswise in the intake manifold (1), integral with this shaft,
**characterized in that**
- the partition (6) of each of the inlet ducts (5) extends into the associated intake pipe (4) of the intake manifold (1), and
- each of the flaps ( 7) is rotationally mobile between, on the one hand, an open position in which it is housed in an aperture (10) provided for that purpose on the inner surface of the associated intake pipe (4), on the lower part of this pipe, so as to unobstructedly open essentially the entire upper and lower duct segments and of the associated inlet duct (5), and on the other hand a sealing position in which it cooperates with the partition (6) so as to essentially seal the lower segment (51) of the associated inlet duct (5).

2. Air intake device according to claim 1, **characterized in that** in sealing position, the flaps (7) are positioned opposite the lower segment (51) of the inlet ducts (5) without being in contact with the free end (60) of the partitions (6), so as to maintain a leak slot (9) at this level.

3. Air intake device according to any one of claims 1 and 2, **characterized in that** the rotation shaft (8) on which the flaps (7) are fixed is a continuous metal shaft mounted on bearings (11) and extending crosswise essentially to the median part of the intake pipes (4) opposite the free end (60) of the partitions (6) and, as applicable, of the leak slots (9).

4. Air intake device according to claim 3, **characterized in that** the rotation shaft (8) onto which the flaps (7) are fixed is equipped with flats (12) in line with the intake pipes (4) so as to reduce the pressure drop at this level as much as possible.
